# EUROPEAN PATENT SPECIFICATION

(11) **EP 3 049 747 B1**
(45) Date of publication and mention of the grant of the patent: **06.11.2019**
(21) Application number: 14780779.6
(22) Date of filing: 06.09.2014
(51) Int. Cl.: F28D 20/00

(54) **AN INLET SYSTEM FOR A THERMAL STORAGE VESSEL**
EINLASSSYSTEM FÜR EINEN WÄRMESPEICHERBEHÄLTER
SYSTÈME D'ENTRÉE POUR UN RÉCIPIENT DE STOCKAGE THERMIQUE

(30) Priority: 06.09.2013 GB 201315899
(43) Date of publication of application: 03.08.2016
(73) Proprietor: Gannet Limited, Nottingham, Nottinghamshire NG4 3DH (GB)
(72) Inventor: SIMON, Fanshawe, Nottingham Nottinghamshire NG4 3DH (GB)
(74) Representative: Avidity IP
(86) International application number: PCT/EP2014/069019
(87) International publication number: WO 2015/032933

(56) References cited:
- EP-A1- 1 039 256
- EP-A2- 2 418 449
- WO-A1-00/63624
- DE-A1- 4 135 453
- DE-C1- 19 918 990
- FR-A1- 2 364 411

## Description

Aspects of the present invention relate to an inlet system for a thermal storage and more particularly to thermal storage with a thermal stratified fluid in a vessel or tank as part of a thermal store.

Thermal storage will increasingly become important with regard to energy efficient heating. There is already a strong commercial case for storage of heat in combination with electric heating. Night storage heaters are widely used for space heating. Adding a thermal store to a heat pump or solar thermal system offers the possibility of a heating system using conventional radiators with running costs and energy using around a third of that of storage heaters.

Thermal stores are widely used with solar thermal systems so that the heat can be used after the sun has gone in. Thermal stores are also used with heat pumps and boilers which don't like to be turned on and off too often. A large thermal store allows the possibility of using electricity to heat the water at times when the electricity supply is plentiful and cheap and deliver heat when required.

Both solar thermal devices and heat pumps work more efficiently at lower temperatures. Under-floor heating is a preferred distribution method because it requires a lower temperature in the circulating fluid to distribute the heat. At the same time, domestic hot water and other types of heating may require higher temperatures. "Stratified" or "layered" thermal stores are already widely specified and used in modern heating systems. The hottest and least dense fluid will rise to the top of the thermal store. The coldest and most dense water will sink to the bottom of the thermal store. However, it will be appreciated that a thermal store is dynamic in that there will be inflows and outflows with inherent turbulence and agitation of the stratified layers. Thermal stores are often designed to allow more than one source of heat to feed the thermal store, for example, solar thermal, a heat pump and a gas boiler as backup. Also, there may be several "consumers" to draw fluid from the thermal store such as radiators, under floor heating, heat exchangers for swimming pools and plate heat exchangers for hot water preparation. In most common applications there is a single volume of fluid used to store and distribute heat within the heating system.

EP-A-1039256, DE-C-19918990 and DE-A-4135453 disclose a vessel according to the preamble of claim 1.

In accordance with aspects of the present invention there is provided a vessel as claimed in claim 1 below.

The flexible sleeve may have a substantially consistent cross-sectional area. The sleeve may have a variable cross-section. The variable cross-section may bell out to broaden towards the remote end. The variable cross-section may taper to narrow towards the outlet. The cross section of the sleeve may vary along its length in any way that suits the aims of the invention.

In this context it is important to appreciate that the primary purpose of the flexible sleeve is not guide the flow but simply to prevent it from mixing with the fluid in the body of the thermal store until it has, by virtue of its own buoyancy, risen or dropped to the layer where the temperatures match. If a suitable material is chosen, the shape of the cross section will vary randomly as a result of eddies and flow variations within the sleeve. Even the cross sectional area may vary dynamically if an especially elastic material is used.

The remote end from the flexible sleeve may be open or it may be connected to an outlet assembly designed to assist in the discharge of the fluid without disturbance to the fluid in the body of the store.

The remote end may be perforated with apertures and/or holes and/or slits.

The flexible sleeve may have a plurality of perforations, apertures or slits towards the outlet end of the flexible to allow the flow to "spread" in the layer.

The outlet may have threads or flaps to calm the flow leaving the flexible sleeve.

The inner and/or the outer surface(s) of the flexible sleeve may have fine hairs or flaps similar to the fur or scales on an animal. This would serve to trap fluid near the surface(s) and reduce transfer of heat by conduction & convection through the wall of the sleeve.

The flexible sleeve may have a drawstring running through it and attached to the outlet to allow the sleeve to be withdrawn through the inlet assembly for maintenance purposes.

The inlet assembly may have a screening element designed such that it can be withdrawn from the inlet from outside the thermal Store. This could be used to anchor the other end of the drawstring described above.

A thermal store will normally have several inlets. Each inlet may be connected to one or more flexible sleeves.

An outlet assembly may have a closure to inhibit fluid flow until the pressure at the end of the flexible sleeve is slightly in excess of that in the body of the thermal store outside the sleeve. The closure may be a purse string arrangement. The closure may be biased to closure to encourage the outlet assembly to fill before fluid is discharged into the body of the store. The closure may be opened by pressure differentials.

An outlet assembly may include one or more "buoyance elements" of densities different to that typical of the fluid passing through the flexible sleeve. Such elements can compensate for differences between the densities of the materials used for the sleeve and the outlet assembly. They can also be used to orientate an outlet assembly by putting a light element at the top and/or a heavy element at the bottom of the assembly.

The flexible sleeve may be attached to inlet assembly close to the point of entry into the thermal store or conventional pipework may carry the flow to one or more points anywhere inside the thermal store where sleeve(s) are connected to them

The inlet assembly may incorporate a screen or perforations to prevent the flexible sleeve being drawn back into the inlet in the event of a change in flow direction.

The inlet assembly may incorporate flow modifying elements to remove kinetic energy from the flow into the thermal store such that it is already calmed as in enters the flexible sleeve,

The flexible sleeve may have a single inlet and divide into a number of connected outlets

Embodiments of the invention will now be described by way of example only with reference to the accompanying drawings in which:
Figure 1 is a schematic cross-section of a stratified thermal store in various states with a flow inlet in accordance with aspects of the present invention;
Figure 2 is a schematic cross-section of a stratified thermal store which shows a flexible sleeve with a separate outlet assembly in accordance with aspects of the present invention;
Figure 3 is a schematic cross-section of a stratified thermal store with an inlet connected to a vertical tube with multiple short flexible sleeves attached to it in accordance with aspects of the present invention;
Figure 4 is a schematic cross-section of a stratified thermal store with an inlet connected to a double ended flexible sleeve connected to it and sliding rings to prevent the sleeve fouling another assembly within the store in accordance with aspects of the present invention;
Figure 5 is a schematic cross-section of a practical example in which embodiments of the invention are used for a stratified thermal store for a domestic property where a heat pump is supplying heat for under floor space heating and domestic hot water in accordance with aspects of the present invention;
Figure 6 provides schematic illustrations of an inlet assembly designed to prevent the flexible sleeve being drawn back into the inlet by a reversal of the flow with aspects of the present invention;
Figure 7 provides examples of different outlet assemblies in accordance with aspects of the present invention; and,
Figure 8 provides schematic illustrations of flexible sleeve cross-sectional shapes in accordance with aspects of the present invention.

Aspects of the invention provide an inlet to a vessel through which an amorphous fluid flows and within which there is a vertical temperature gradient. Fluid entering the vessel directly will tend to drop or rise to that level in the vessel where the temperature is the same. There will, however, be some mixing and degradation of the temperature gradient. If the fluid enters at considerable velocity then this will produce turbulence which will further exacerbate the mixing

The invention uses a highly flexible sleeve connected at one end to the inlet with the other end free to move, at least, in the vertical plane. The sleeve prevents the incoming fluid mixing with the fluid already inside the vessel until it has already reached the layer at the same temperature.

This invention is of special significance to the design of vessels for the storage of heat using the fluid used to collect and distribute it. More particularly to stratified or layered thermal stores in which heated fluid is stored and used for the purpose of heating.

Thermal stores act to contain a volume of heated fluid which is typically water treated with corrosion inhibitors. This is generally part of a larger volume of heat transfer fluid which circulates through the system and is used to transfer heat between producers of heat and consumers of heat. The thermal store allows heat to be taken from a number of heat sources including a boiler, solar, thermal panels, a heat pump and geothermal sources. It allows the heat to be delivered to a number of consumers such as radiators, under floor heating, heat exchangers for the preparation of domestic hot water and heat exchangers for the heating of swimming pools and Jacuzzis. When fluid enters one of these thermal stores ideally it should travel to the layer at the same temperature whilst minimising the mixing of fluid at different temperatures. There are many designs specifically aimed at minimising this mixing but none are ideal.

In accordance with aspects of the present invention there is provided means for calming water entering a stratified thermal store and allowing it to pass to the layer at the same temperature as the incoming fluid whilst minimising mixing and turbulence within the thermal store. Typically a highly flexible thin walled sleeve is fixed and sealed to the inlet assembly where the fluid is fed into the thermal store. This sleeve acts like a snake and would look much like a large and long condom with the fixed inlet pipe feeding one end and the remote end open or feeding a floating or buoyant outlet exit assembly. Fluid entering the thermal store is confined and guided so as to force the entire or almost all of the flow down the flexible sleeve. As the fluid flows down the flexible sleeve it will cause the sleeve to drop or rise within the body of the heat store until an outlet portion of the flexible sleeve in the thermal store stabilises in a layer at the same density (and therefore temperature) as the fluid travelling towards the remote (floating) end of the flexible sleeve. When the fluid emerges from the sleeve it will be moving slowly and be at or close to the same temperature as the fluid in the body of the thermal store at that level or strata.

Features and requirements of aspects of the present invention include:
◆ The material used to manufacture the flexible sleeve should be very thin and, ideally, close to the same density as the fluid. The weight of material should not significantly affect the forces acting on the sleeve created by the density differences between the fluid within sleeve and fluid in the body of the thermal store outside the sleeve.
◆ The material used to manufacture the flexible sleeve must be extremely flexible such that stiffness in the material would not impede the ability of the sleeve to find its level as determined by the hydraulic pressures acting on the sleeve. An elastomer or a thin walled elastic material similar to that used for a party balloon or a condom would be ideal.
◆ Ideally, the material should have a surface exhibiting low friction so that where several flexible sleeves are operating close together they will easily slide past each other. The material must not stick to itself under any circumstances.
◆ The material must be long lived and capable of withstanding the full range of temperatures which the temperature layered buffer heated fluid in a thermal store will be expected to operate at.
◆ Mechanical means would need to be provided to prevent the flexible sleeve being drawn towards or into the outlets from the thermal store when fluid is taken from the thermal store.
◆ Where there is more than one inlet to the thermal store or other assemblies such as coils, braces, and other internal assemblies care should be taken with the design to ensure the flexible sleeve isn't obstructed or snagged.
◆ Similarly, where there is more than one flexible sleeve in the thermal store, the design should prevent them from obstructing each other or becoming entangled.
◆ Consideration should be given to entrained gas or air which may collect in the flexible sleeve or outlet assembly. In most cases it will find an escape into the body of the thermal store with minimal disruption to the intended functioning of the invention. In specific cases it may become trapped in or near the outlet and cause the outlet to be lifted out of correct stratum in the thermal store.

Some enhancements could be:
1. The inlet pipes feeding the thermal store could project into the thermal store for several times the pipe diameter. It would be blocked at the end with and have small holes along the length to allow the incoming fluid to be projected radially from the inlet pipe against the side of the flexible sleeve. The fluid leaving the feed pipe would be projected against the side of the flexible sleeve minimising turbulence.
2. Where the flexible sleeve is installed in a vertical cylinder the inlet pipes could include a right angle bend prior to the attachment of the flexible sleeve so that the flexible sleeve would tend to hug the wall of the cylinder. This could result in a gentle circulation allowing several flexible sleeves to operate in the thermal store whilst minimising the risks of them obstructing each other.
3. The flexible sleeve could be belled out, i.e. the diameter would increase towards the end of the flexible sleeve slowing down the fluid and allowing it to spread horizontally in a layer with a large vertical temperature gradient. This would progressively slow the fluid velocity to minimise turbulence where it leaves the end of the flexible sleeve at the outlet.
4. Rather than using the flexible sleeve to slow down and remove turbulence on entry to the thermal store, the flexible sleeve could be of smaller diameter flexible sleeve and terminated in a balloon or a closed length of larger diameter flexible sleeve. The smaller diameter flexible sleeve would allow the enlarged end of the flexible sleeve to float at the level where the temperature was closest to the incoming flow. In either case a plurality of perforations or a carefully positioned single exit in the enlarged end would allow the fluid to enter the thermal store whilst minimising turbulence. The advantage of this is to reduce the diameter of that portion of the flexible sleeve carrying the fluid from the fixed point of entry to the floating portion where it exits and thus to reduce the conduction of heat through the flexible sleeve wall.
5. The exit point of the flexible sleeve could be rigid or semi rigid, of a design to suit other requirements of the system as long as it is free to move vertically. The chief requirement of such a solution would be that the overall density of the exit outlet portion of the flexible sleeve should be as close as possible to that of the fluid in the thermal store in the middle of the range of temperatures over which it would operate. The internal volume of the exit assembly would also have to be large in proportion to the displacement of the assembly itself to allow it to float at the correct level.
6. In respect of the previous two embodiments, the thermal store could use elements of different densities to orientate the exit assembly. For instance, the balloon design could have a light element attached to the top, a heavy element at the bottom and exit holes in a circle so as to project the fluid exiting the balloon horizontally in all directions. The flexible sleeve would allow the balloon to move to a position of neutral buoyancy and the top and bottom elements would ensure the exits were in the same plane.
7. The inside and/or the outside of the flexible sleeve could be covered with tiny hairs, flaps or other means of trapping the fluid near the surface to minimise convection at the surface. This would limit conduction of heat through the wall of the flexible sleeve but care would need to be taken not to compromise the flexibility of the flexible sleeve.
8. A light flexible assembly fixed and sealed to the inlet of a stratified thermal store with one or more outlets in a part of the assembly which is free to move and where the position of the assembly is substantially determined by neutral buoyancy such that the fluid flowing through the assembly is at the same temperature as the fluid outside the assembly at that level within the stratified thermal store.
9. Enhancements within the flexible assembly to absorb kinetic energy so as to slow the fluid such that it won't cause turbulence at the outlets into the main body of the stratified thermal store.
10. The application of the above to a thermal store used for heating a building where there are one or more producers of heat and one or more consumers of heat.
11. The application of the above to a thermal store containing a heat exchange assembly for the heating of fresh water.

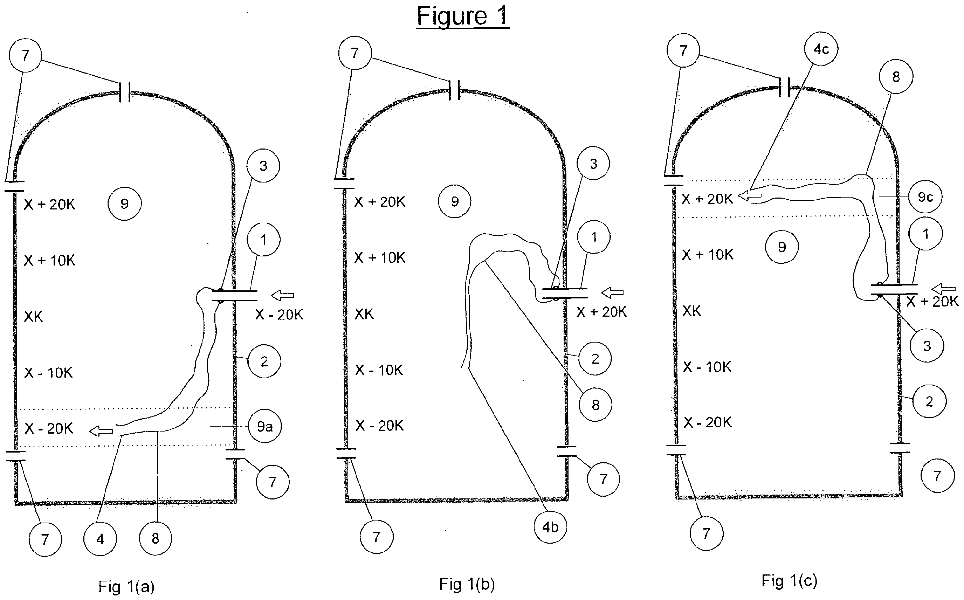

Figure 1 shows aspects of the present invention in its simplest form. Fig 1(a) shows a thermal store 2 with several ports 7 which may be inlets or outlets. A single embodiment of the invention is shown for clarity although, typically, there would be several inlets and thus several similar inlet assemblies in the same thermal store. A fixed inlet port 1 allows the fluid to flow into the thermal store. A flexible sleeve 8 is sealed to the inlet port 1 by means of a seal 3 inside the thermal store. This forces all or almost all of the flow to pass down the sleeve to the end 4 which is floating free in the body of fluid in the store 9 to settle at the correct or consistent temperature in the end 4 and the fluid in the vessel there about.

To the left of the thermal store are figures indicating the temperature of the fluid in Kelvin expressed in relation to the temperature at the centre of the store, denoted "X" Kelvin. In Fig 1(a) fluid is entering the thermal store through that port at X - 20K and everything is stable. Because the density of the fluid is higher than that of the fluid in the body of the store 9 at the level of the inlet port 1, the fluid entering the sleeve drops and takes the sleeve 8 with it. When it reaches the lower layer 9a (between the dotted lines) there is no longer a downward force on it as the temperatures and thus, the densities are in balance. Here the flow will try to spread out horizontally until it passes out of the end 4 for combination with the fluid in the vessel thereabout. In this example the flexible sleeve 8 has a uniform cross section throughout its length (except for where it is attached to the inlet port 3). The correct cross section is obtained by balancing the effect of having it too small resulting in a high fluid exit velocity out of the end 4 causing turbulence and too large a cross section increasing thermal transfer through the wall of the flexible sleeve 8.
Fig 1 (b) illustrates what happens when the temperature of the fluid entering the flexible sleeve has just increased from X - 20K to X + 20K. The lower density fluid entering the sleeve 8 collects near the inlet and begins to rise whilst the colder denser fluid near the outlet drains out and the free end of the sleeve 4b closes up and is pulled up by the hotter fluid. Fig 1c illustrates the situation where hotter fluid flow has reached the outlet and stabilised such that the sleeve 8 is uplifted and the outlet 4c stabilised at the temperature strata 9c consistent from the end of the sleeve.

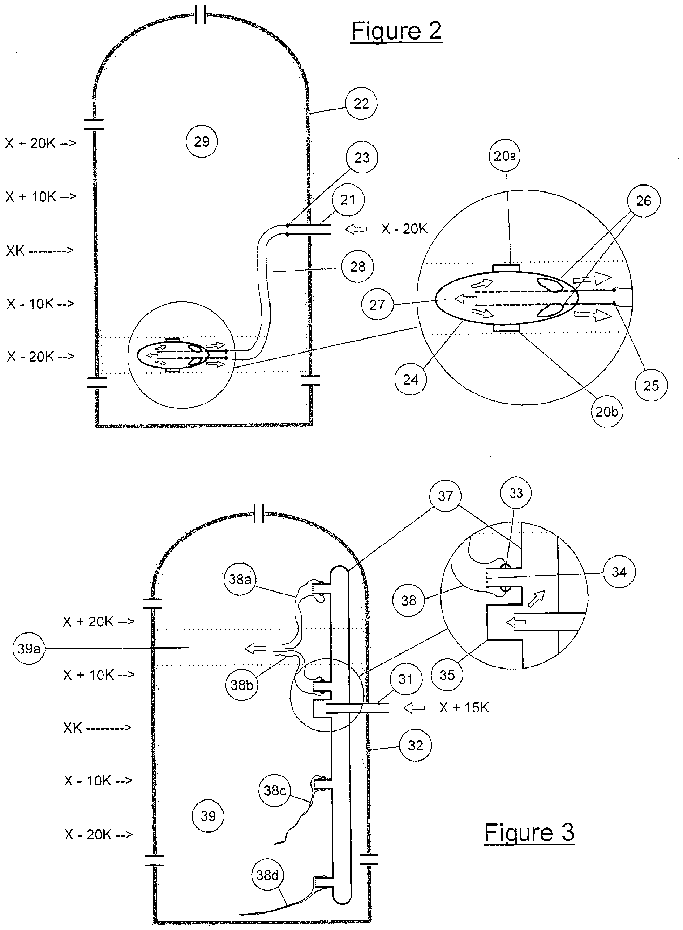

Figure 2 shows an embodiment of the invention with a separate outlet assembly 24 in the shape of a flattened sphere. The outlet from flexible sleeve 28 is connected to a rigid tube 25 which passes a little way past the centre of the outlet assembly 24. The fluid is projected to the back of the assembly 27 where its kinetic energy is reduced allowing it to pass into the body of the thermal store 29 through one or more apertures 26 with minimal disturbance to the layer. As the outlet assembly can calm the flow, the flexible sleeve 28 can be made with a smaller cross section.

This embodiment could be fitted with buoyancy elements 20 to orientate the assembly and correct for any density differences in the material used to manufacture the exit assembly. In the example a lighter element 20a has been added to the top and a heavier element 20b added to the bottom. The positions and sizes of the elements should be such that without the flow or flexible sleeve, the outlet assembly would naturally float in the correct orientation at the centre of the thermal store.

In this embodiment, entrained gas could collect in the outlet assembly. If this is a significant risk, it would be sensible to put some small apertures in the top of the assembly close to the top weight 20a.

Figure 3 shows an embodiment of the invention where the inlet port 31 feeds a fixed vertical tube 37. The flow is projected into a calming chamber 35 before passing into the vertical tube. There are four outlets to which four flexible sleeves are connected - 38a, 38b, 38c, and 38d. Each has a screen or perforated plate 36 to prevent the sleeve being pulled back into the vertical tube. The calming chamber 35 may have baffles or similar within to reduce turbulence. A key requirement of the design is that the differential pressures between the body of the thermal store and within the vertical tube are primarily determined by the vertical temperature profiles inside and outside the sleeve tube rather than fluid dynamics. If this is the case the pressure differences will cause all the flexible sleeves distant from the layer matching the inward flow temperature, 38c & 38d, to collapse and seal the ports to which they are connected. One or two flexible sleeve(s) close to the layer will take the flow, in this case, 38b and a little through 38a.

In this embodiment, entrained gas could collect in the fixed vertical tube. If this is a significant risk, it would be sensible to put a small aperture or automatic bleed valve at the top of the vertical tube. The flexible sleeves need to be designed to take the full flow, but they don't have to be much longer than half the vertical separation.

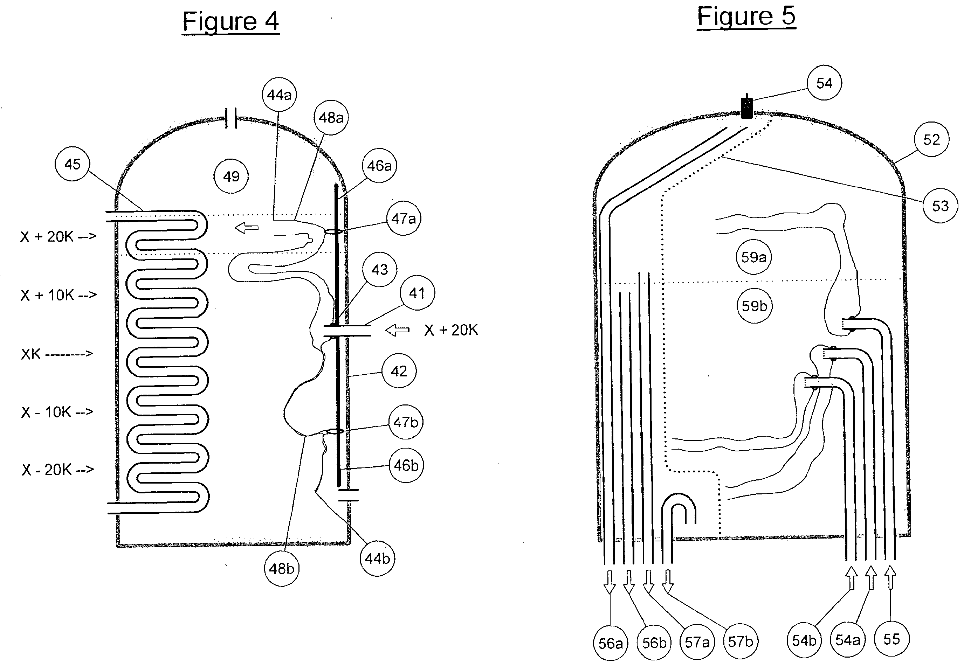

Figure 4 shows an embodiment of the invention where the inlet feeds into the centre of a flexible sleeve such that it has two outlets, 44a and 44b. This is an example of a design suitable for retrofitting into a pre-existing thermal store with a heat exchanger or other obstruction inside it. The inlet assembly 41 has two smooth rods fixed to it so that they extend vertically up 46a and down 46b respectively. Each section of the flexible sleeve has a ring bonded to it, 47a & 47b which slide up and down to allow the outlet to find its level but prevent it from getting entangled with other structures internal to the thermal store. In this example the fluid entering the thermal store is hot, X + 20K, so it rises to the appropriate level, 49a. The lower section of the sleeve 48b will collapse in on itself unless the flow in gets cooler than XK and it starts to take the flow as a result of the inward flow wanting to drop.

Figure 5 shows a practical implementation of the invention. This is a thermal store for a domestic property using a heat pump for under floor heating and domestic hot water. All the ports are in the bottom of the thermal store, a solution preferred by many engineers as it reduces thermal syphoning and heat leaks whilst the fluid is static. Three separate flexible sleeves are used for returns into the thermal store. A feed 56a is provided to a plate heat exchanger for domestic hot water preparation. The fluid is returned into inlet 54a and, in a well-controlled heat exchanger, it is fairly cool so the sleeve is discharging close to the bottom of the thermal store. A feed 56b feeds the under floor heating which returns into inlet 54b.

Typically, temperature targets are set for individual bodies of fluid vertically within the thermal store as determined by the requirements of the individual consumers. These targets are used to control those heat sources which can be turned on and off. Each outlet 56 for a consumer will be positioned at the upper level of the region with the target set for the temperature required by that consumer. In this case the smaller upper portion of the thermal store 59a is used for hot water preparation. The remainder 59b is used for under floor heating. The heat pump draws fluid from outlet 57a to take heat from the top section 59a and from outlet 57b to take heat from the lower section 59b of the vessel. The heated fluid is returned to the thermal store through inlet 55 and the flexible sleeve tube discharges the fluid at the appropriate level in the vessel of the store.

A screen 53 is shown to prevent the flexible sleeves being drawn into the outlets 56, 57 from the thermal store. An auto-vent valve 54 is shown to allow accumulated gas/air to be released from the thermal store.

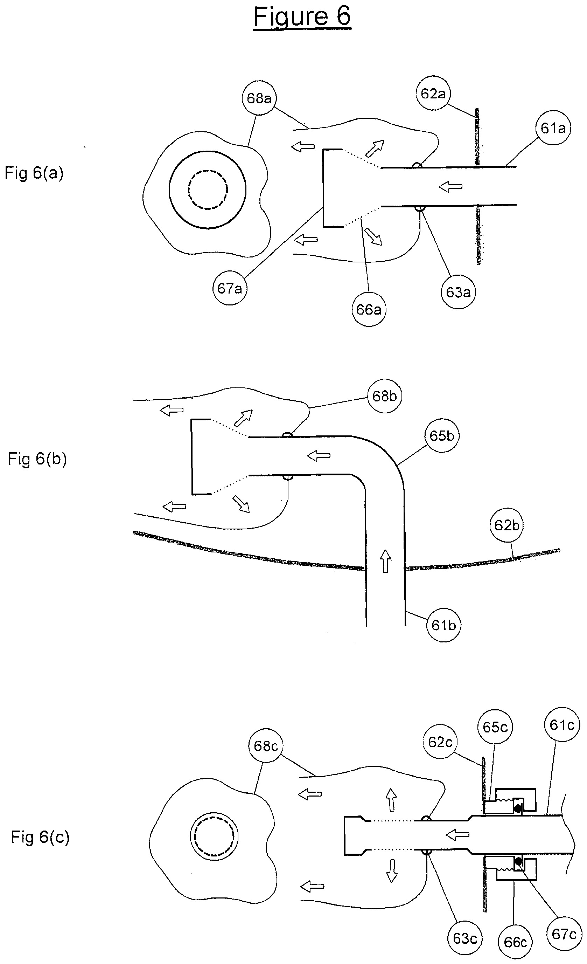

Figure 6 shows an enhancement for the fixed inlet 61a to which the flexible sleeve 68a is connected. The kinetic energy from the flow into the thermal store is dissipated by virtue of being directed against a blank plate 67a and forced out radially through a screen or perforated element 66a such that the flow is already calm as it starts its journey down the flexible sleeve 68a. The screen 66a also prevents the sleeve from being drawn back inside the inlet 61 in the event of a reversal of fluid flow from the body of fluid in the vessel.

Fig 6(b) shows how a 90° bend in the inlet assembly can be used to direct the flexible sleeve such that it will tend to hug the wall of a cylinder creating a gentle circulation which could reduce problems of several sleeves becoming entangled. This might also make it suitable for retrofitting into existing cylinders.

Fig 6(c) shows how the complete assembly could be made removable from outside the thermal store. The threaded collar 65c forms part of the wall 62c of the thermal store. The inlet tube 61c can be withdrawn complete with the flexible sleeve 68c and its seal 63c. The inlet assembly is fixed in place with compression fitting 66c, flange and "O" ring seal 67c.

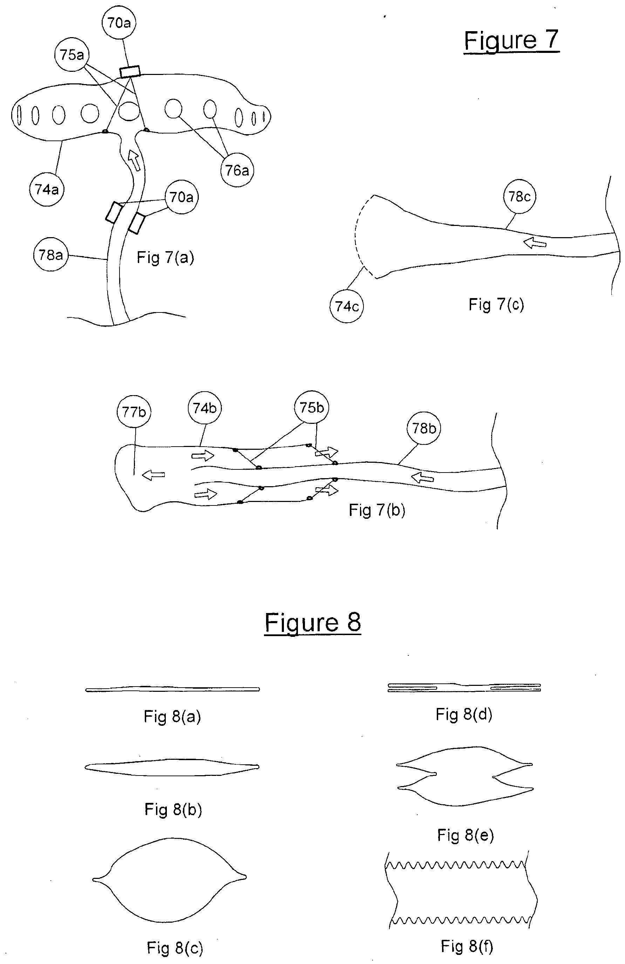

Figure 7 shows some further embodiments relating to the outlet from the flexible sleeve. Fig 7(a) would be suitable for use with a thermal store with inlets through the bottom of the store. The outlet from the flexible sleeve consists a bladder 74a formed from the same or a similar material as of the sleeve. The inward flow enters through the underside and hits the top of the bladder. This allows the flow to be calmed within the bladder before it emerges into the body of the thermal store radially through a plurality of apertures 76a. This embodiment can be further enhanced by the addition of buoyant elements, 70a, in this case two heavier ones below and a light one above. To maintain the low vertical profile webs or strings 75a are used to limit the separation between the top and bottom surfaces of the bladder. As with the exit assembly in Figure 2 the buoyancy of the buoyant elements 20a should be such that without any flow, the outlet assembly would naturally float in the correct orientation at the centre of the thermal store.

In Fig 7(b) a larger diameter sleeve 74b has been added to the flexible sleeve which carries the flow from the inlet assembly 78b. Strings or webbing 75b are arranged to hold the outer sleeve to the inner with an offset. The flow is projected into the closed end 77b of the outer sleeve such that it is calmed and flows back in the opposite direction before emerging into the body of the thermal store. With this arrangement the inner flexible sleeve should be sufficiently long that at the extremes of its vertical positioning the whole of the outer sleeve can adopt a horizontal orientation.

Fig 7(c) shows a variation on the open ended flexible sleeve where the free end is belled out and the fluid exits through a plurality of small apertures 74c. This provides a simple solution to calming the flow at the outlet end, allowing the cross section of the main portion of the sleeve 78c to be smaller.

The concept of the invention is that the flexible sleeve should be so flaccid that it has no definable shape. However, there are circumstances when some features defining the shape of the sleeve would be advantageous. Figure 8 shows some variations in shape and the cross sections of the sleeves in accordance with aspects of the present invention. Having the sleeve made flat as in Fig 8(a) doesn't just have advantages for storage and handling. It would also give the flexible sleeve a natural shape to fall back into when it collapses in on itself. Fig 8(b) and Fig 8(c) shows what might happen to the sleeve at a low flow and then at a higher flow. Fig 8(d) shows another variation on the lay flat sleeve shown in Fig 8(d) with Fig 8(e) showing what happens with a moderate flow through the sleeve. The final sketch, Fig 8(f) shows a cross section through the axis showing how it could be made as a concertina. Such a concertina would militate against good sealing when it collapses in on itself but it would increase the overall flexibility of the sleeve. This might be a good option for smaller sleeves feeding outlet assemblies which can calm a higher flow velocity at the floating end of the sleeve.

## Claims

1. A vessel having an inlet system and contaning a fluid having in use a vertical temperature gradient, the inlet system comprising a flexible sleeve which extends horizontally across the vessel whereby a fluid flow into the vessel in use is contrained from mixing with fluid within the body of the vessel, the flexible sleeve having a remote end for the fluid flow and being able in use to freely float in the fluid within the vessel dependent upon a density difference between the fluid in the body of the remote end and the fluid in the vessel, **characterised in that** the remote end is configured to close when denser colder fluid in the vessel is about the remote end with the fluid flow whereby the remote end raises until the density difference between the fluid in the vessel thereabout and the fluid flow in the flexible sleeve is substantially removed and the remote end is horizontally incident upon that part of the fluid in the vessel at or close to the temperature of the fluid flow from the flexible sleeve and the remote end opens.

2. A vessel as claimed in claim 1 wherein the flexible sleeve is formed from a flexible plastics and/or elastomeric tube to provide the constraint from mixing.

3. A vessel as claimed in claim 1 or claim 2 wherein the remote end has an element to facilitate movement to the layer within the vessel.

4. A vessel as claimed in any preceding claim wherein the flexible sleeve includes at least one element to facilitate movement to the layer within the vessel.

5. A vessel as claimed in claim 2 or any claim dependent thereon wherein the flexible sleeve is configured to be substantially flaccid at pre-determined temperatures.

6. A vessel as claimed in claim 2 or any claim dependent thereon wherein the flexible sleeve is attached and extends through or from a wall of a thermal store of the vessel at an angle.

7. A vessel as claimed in claim 6 wherein the angle is perpendicular to the wall of the thermal store of the vessel.

8. A vessel as claimed in claim 7 wherein the angle provides a right angle turn to provide the flexible sleeve flat to the wall of the thermal store of the vessel.

9. A vessel as claimed in claim 7 wherein the angle provides an angled or inclined orientation for the flexible sleeve relative to the wall of the thermal store of the vessel.

10. A vessel as claimed in claim 2 or any claim dependent thereon wherein the flexible sleeve has a substantially consistent cross-section along its length.

11. A vessel as claimed in claim 2 or any claim dependent thereon wherein the flexible sleeve has a variable cross-section along its length.

12. A vessel as claimed in claim 11 wherein the variable cross-section tapers to narrow towards the outlet.

13. A vessel as claimed in claim 11 wherein the variable cross-section bells out to broaden towards the outlet.

14. A vessel as claimed in any preceding claim wherein a remote end is perforated with apertures and/or holes and/or slits.

15. A vessel as claimed in claim 2 or any claim dependent thereon wherein the flexible sleeve is configured to provide a substantially consistent cross-section with temperature over a range of expected temperatures.

## Patentansprüche

1. Ein Kessel mit einem Einlasssystem und einem Fluid darin, das im Betrieb einen vertikalen Temperaturgradienten hat, das Einlasssystem umfasst einen flexiblen Schlauch, der sich horizontal durch den Kessel erstreckt, wodurch ein Fluidfluss in den Kessel im Betrieb davon abgehalten wird, sich mit dem Fluid in dem Kesselbehälter zu mischen, der flexible Schlauch hat ein entferntes Ende für den Fluidfluss und ist im Betrieb in der Lage, frei in dem Fluid in dem Kessel zu treiben, abhängig von einer Dichtedifferenz zwischen dem Fluid in dem Behälter des entfernten Endes und dem Fluid in dem Kessel, **gekennzeichnet dadurch, dass** das entfernte Ende konfiguriert ist, sich zu schließen, wenn sich dichteres kälteres Fluid in dem Kessel um das entfernte Ende mit dem Fluidfluss herum befindet, wobei das entfernte Ende ansteigt bis die Dichtedifferenz zwischen dem umgebenden Fluid in dem Kessel und dem Fluidfluss in dem flexiblen Schlauch im Wesentlichen aufgehoben ist, und das entfernte Ende horizontal mit dem Teil des Fluids im Kessel bei oder nahe der Temperatur des Fluidflusses im flexiblen Schlauch verbunden ist, und sich das entfernte Ende öffnet.

2. Ein Kessel nach Anspruch 1, wobei der flexible Schlauch aus flexiblem Kunststoff und/oder aus einem elastomeren Rohr geformt ist, um das Mischen zu verhindern.

3. Ein Kessel nach Anspruch 1 oder Anspruch 2, wobei das entfernte Ende ein Element aufweist, das die Bewegung zu der Schicht im Kessel ermöglicht.

4. Ein Kessel nach einem der vorhergehenden Ansprüche, wobei der flexible Schlauch mindestens ein Element aufweist, das die Bewegung zu der Schicht im Kessel ermöglicht.

5. Ein Kessel nach Anspruch 2 oder jedem davon abhängigen Anspruch, wobei der flexible Schlauch konfiguriert ist, bei vorbestimmten Temperaturen im Wesentlichen schlaff zu sein.

6. Ein Kessel nach Anspruch 2 oder jedem davon abhängigen Anspruch, wobei der flexible Schlauch an einer Wand eines thermischen Speichers des Kessels in einem bestimmten Winkel befestigt ist und sich durch oder von einer Wand eines thermischen Speichers erstreckt.

7. Ein Kessel nach Anspruch 6, wobei der Winkel senkrecht zu der Wand des thermischen Speichers des Kessels verläuft.

8. Ein Kessel nach Anspruch 7, wobei der Winkel eine rechtwinklige Biegung aufweist, damit der flexible Schlauch flach an der Wand des thermischen Speichers des Kessels verläuft.

9. Ein Kessel nach Anspruch 7, wobei der Winkel eine abgewinkelte oder schräge Ausrichtung für den flexiblen Schlauch im Verhältnis zur Wand des thermischen Speichers des Kessels bietet.

10. Ein Kessel nach Anspruch 2 oder jedem davon abhängigen Anspruch, wobei der flexible Schlauch einen im Wesentlichen gleichbleibenden Querschnitt entlang seiner Länge hat.

11. Ein Kessel nach Anspruch 2 oder jedem davon abhängigen Anspruch, wobei der flexible Schlauch einen variablen Querschnitt entlang seiner Länge hat.

12. Ein Kessel nach Anspruch 11, wobei sich der variable Querschnitt zum Auslass hin verjüngt.

13. Ein Kessel nach Anspruch 11, wobei sich der variable Querschnitt zum Auslass hin verbreitert.

14. Ein Kessel nach einem der vorhergehenden Ansprüche, wobei ein entferntes Ende mit Öffnungen und/oder Löchern und/oder Schlitzen versehen ist.

15. Ein Kessel nach Anspruch 2 oder jedem davon abhängigen Anspruch, wobei der flexible Schlauch konfiguriert ist, einen im Wesentlichen gleichbleibenden Querschnitt mit Temperatur über einen Bereich erwarteter Temperaturen bereitzustellen.

## Revendications

1. Récipient présentant un système d'admission et contenant un fluide présentant lors de son utilisation un gradient vertical de température, le système d'admission comprenant un manchon souple qui s'étend horizontalement à travers le récipient, grâce à quoi un écoulement de fluide dans le récipient en utilisation est empêché de se mélanger avec le fluide à l'intérieur du corps du récipient, le manchon souple présentant une extrémité distante destinée à l'écoulement de fluide et étant en mesure lors de l'utilisation de flotter librement dans le fluide à l'intérieur du récipient selon une différence de densité entre le fluide dans le corps de l'extrémité distante et le fluide dans le récipient, **caractérisé en ce que** l'extrémité distante est conçue pour se fermer lorsque le fluide plus dense plus froid dans le récipient est autour de l'extrémité distante comportant l'écoulement de fluide, grâce à quoi l'extrémité distante se soulève jusqu'à ce que la différence de densité entre le fluide dans le récipient autour de celui-ci et l'écoulement de fluide dans le manchon souple est pratiquement supprimé et l'extrémité distante est incidente horizontalement sur cette partie du fluide dans le récipient au niveau ou proche de la température de l'écoulement de fluide à partir du manchon souple et l'extrémité distante s'ouvre.

2. Récipient tel que revendiqué dans la revendication 1, dans lequel le manchon souple est constitué d'une matière plastique souple et/ou d'un tube en élastomère pour assurer l'empêchement de se mélanger.

3. Récipient tel que revendiqué dans la revendication 1 ou la revendication 2, dans lequel l'extrémité distante présente un élément destiné à faciliter le mouvement de la couche à l'intérieur du récipient.

4. Récipient tel que revendiqué dans une quelconque des revendications précédentes, dans lequel le manchon souple comprend au moins un élément destiné à faciliter le mouvement de la couche à l'intérieur du récipient.

5. Récipient tel que revendiqué dans la revendication 2 ou une quelconque revendication qui en dépend, dans lequel le manchon souple est conçu pour être pratiquement flasque à des températures prédéfinies.

6. Récipient tel que revendiqué dans la revendication 2 ou une quelconque revendication qui en dépend, dans lequel le manchon souple est fixé et s'étend à travers ou à partir d'une paroi d'un stockage thermique du récipient à un angle.

7. Récipient tel que revendiqué dans la revendication 6, dans lequel l'angle est perpendiculaire à la paroi du stockage thermique du récipient.

8. Récipient tel que revendiqué dans la revendication 7, dans lequel l'angle fournit un tour à angle droit pour fournir le manchon souple à plat sur la paroi du stockage thermique du récipient.

9. Récipient tel que revendiqué dans la revendication 7, dans lequel l'angle fournit une orientation oblique ou inclinée destinée au manchon souple par rapport à la paroi du stockage thermique du récipient.

10. Récipient tel que revendiqué dans la revendication 2 ou une quelconque revendication qui en dépend, dans lequel le manchon souple présente une section transversale pratiquement constante le long de sa longueur.

11. Récipient tel que revendiqué dans la revendication 2 ou une quelconque revendication qui en dépend, dans lequel le manchon souple présente une section transversale variable le long de sa longueur.

12. Récipient tel que revendiqué dans la revendication 11, dans lequel la section transversale variable présente une forme de cône pour se rétrécir vers la sortie.

13. Récipient tel que revendiqué dans la revendication 11, dans lequel la section transversale variable présente une forme de cloche pour s'élargir vers la sortie.

14. Récipient tel que revendiqué dans une quelconque revendication précédente, dans lequel l'extrémité distante est perforée avec des ouvertures et/ou des trous et/ou des fentes.

15. Récipient tel que revendiqué dans la revendication 2 ou une quelconque revendication qui en dépend, dans lequel le manchon souple est conçu pour fournir une section transversale pratiquement constante en température sur une plage de températures attendues.
